# EUROPEAN PATENT SPECIFICATION

(11) **EP 2 730 804 B1**
(45) Date of publication and mention of the grant of the patent: **12.01.2022**
(21) Application number: 12811182.0
(22) Date of filing: 11.06.2012
(51) Int. Cl.: B60K 7/00, B60K 17/04, F16H 1/32

(54) **EPICYCLIC REDUCTION GEAR**
EPIZYKLISCHES UNTERSETZUNGSGETRIEBE
ENGRENAGE RÉDUCTEUR ÉPICYCLOÏDAL

(30) Priority: 08.07.2011 JP 2011152316; 20.07.2011 JP 2011159435; 23.08.2011 JP 2011181864; 02.09.2011 JP 2011192128
(43) Date of publication of application: 14.05.2014
(73) Proprietor: Sumitomo Heavy Industries, Ltd., Tokyo 141-6025 (JP)
(72) Inventor: ISHIZUKA, Masayuki, Yokosuka-shi Kanagawa 237-8555 (JP)
(74) Representative: Carstens, Dirk Wilhelm
(86) International application number: PCT/JP2012/064912
(87) International publication number: WO 2013/008571

(56) References cited:
- WO-A1-92/02745
- DE-A1- 10 243 809
- JP-A- 6 249 298
- JP-A- 11 022 789
- JP-A- 2008 215 550
- JP-U- 62 045 449
- US-A- 5 533 943
- US-A1- 2004 061 393

## Description

### Technical Field

The present invention relates to a planetary reduction gear.

### Background Art

US 5, 533, 943 A discloses a planetary gear device including a first gear, a second gear, a carrier, and composite planetary gears each having a large- and a small-diameter pinion that are formed integrally with each other and arranged in the axial direction. The composite planetary gears are mounted rotatably on respective pinion shafts such that the composite planetary gears are axially movable over predetermined distances due to axial plays, and the pinion shafts are supported by the carrier such that the pinion shafts are disposed around an axis of the carrier. The pinions of the composite planetary gears mesh with the first and second gears, respectively. Each of the first and second gears and the pinions consists of a helical gear whose teeth have a helix angle with respect to the axis. The large-diameter and small-diameter pinions have the same direction of helix and the same amount of lead.

JP 2005-76716 A discloses an eccentric oscillating planetary reduction gear. The planetary reduction gear includes an external gear (planetary gear) and an internal gear with which the external gear is internally engaged. The external gear and the internal gear are set to have a small difference in the number of teeth therebetween.

When an eccentric body shaft including an eccentric body rotates in the planetary reduction gear, the external gear oscillates while being internally engaged with the internal gear and the rotation of the external gear relative to the internal gear is taken out from an output shaft.

An eccentric body bearing is assembled between the eccentric body of the eccentric body shaft and the external gear so that the external gear can smoothly oscillate and rotate on the outer periphery of the eccentric body. The axial length (thickness) of the external gear is long in the axial direction at only a portion in which the eccentric body bearing is disposed. Since the eccentric body bearing having large capacity is disposed here, necessary transmission capacity is secured while the increase of the weight of the entire external gear is suppressed.

### Summary of Invention

### Technical Problem

However, in the structure disclosed in JP 2005-76716 A, so-called dead spaces are formed on the side portions in the axial direction except for the portion of the external gear in which the eccentric body shaft is disposed. For this reason, making the entire planetary reduction gear compact is inhibited.

Further, since protrusions of the external gear are present on both sides in the axial direction, there is also a problem in that stability is poor and handling is also not easy when the external gear is placed on the floor or a work table.

The invention has been made to solve the above-mentioned problems, and an obj ect of the invention is to provide a planetary reduction gear in which the handling of a planetary gear is easy, a space in which a bearing having a size necessary to support the planetary gear is disposed can be reliably secured, and making the entire planetary reduction gear compact can be further facilitated.

### Solution to Problem

In order to achieve the above-mentioned object, the invention provides a planetary reduction gear as set forth in claim 1. Preferred embodiments of the present invention may be gathered from the dependent claims.

In the invention, the planetary gear includes the protrusion that protrudes from only one side of an inner peripheral edge of a bearing hole, in which the bearing is disposed, in the axial direction. Since the bearing is disposed using a large space that includes the inside of the protrusion, it is possible to easily secure sufficient capacity.

Meanwhile, the protrusion overlaps the carrier member that is disposed on the side portion of the planetary gear in the axial direction (and synchronizes with a rotating component or a revolving component of the planetary gear) when seen from a diametral direction of the planetary gear. In other words, the carrier member is assembled so as to approach the side portion of the planetary gear to a position outside the protrusion of the planetary gear in the radial direction so that the carrier member overlaps the protrusion of the planetary gear when seen from a diametral direction of the planetary gear.

As a result, it is possible to suppress a dead space, which is formed on the side portion of the planetary gear in the axial direction, to the minimum after sufficiently securing the capacity of the bearing. Accordingly, it is possible to obtain a planetary reduction gear that is more compact in the axial direction.

Further, since the planetary gear includes the protrusion on only one side in the axial direction (since a protrusion is not present on one side), stability is good and handling is also easy when the planetary gear is placed on the floor or a work table.

### Advantageous Effects of Invention

According to the invention, the handling of a planetary gear is easy, a space in which a bearing having a size necessary to support the planetary gear is disposed can be reliably secured, and making the entire planetary reduction gear compact can be further facilitated.

### Brief Description of Drawings

FIG. 1 is a cross-sectional view showing main parts of an. example of an embodiment of an eccentric oscillating planetary reduction gear according to the invention.
FIG. 2 is a cross-sectional view of the entire planetary reduction gear.
FIG. 3 is a cross-sectional view showing main parts of an example not comprised in the invention.

### Description of Embodiments

An example of an embodiment of the invention will be described in detail below with reference to the drawings.

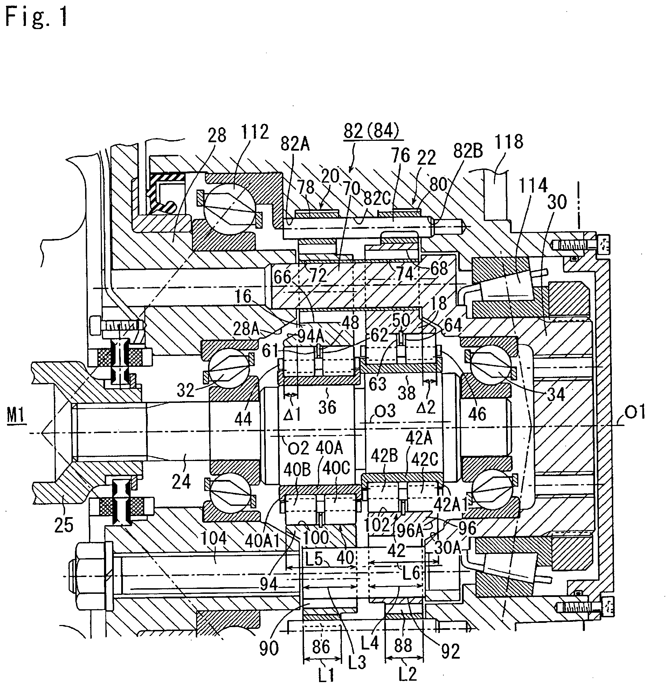

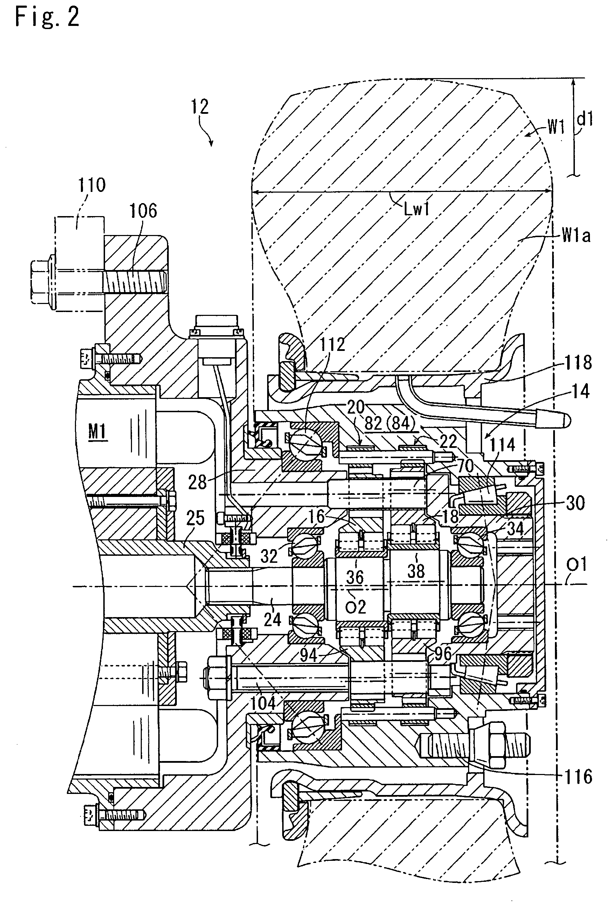

FIG. 1 is a cross-sectional view showing main parts of an example of an embodiment in which an eccentric oscillating planetary reduction gear according to the invention is applied to the drive of a wheel of a forklift, and FIG. 2 is a cross-sectional view of the entire planetary reduction gear.

A wheel W1 of a forklift 12 (of which the entirety is not shown) functions as a "fulcrum" that supports a load. Accordingly, it is preferable that an outer diameter d1 of the wheel W1 be smaller in order to make the position of a fork (not shown) functioning as a "power point" or a "point of application" be close to the ground contact point of the wheel W1 as much as possible. Further, it is preferable that the volume of a tire portion (rubber portion) W1a of the wheel W1 be larger in order to reliably receive the weight of a load. For this reason, the wheel W1 of the forklift 12 often can secure only a very small space therein.

Accordingly, the compactness of the reduction gear is considered very important in order to receive a part of or the entire planetary reduction gear in this small space. In other words, the application to the wheel W1 of the forklift 12 is one of embodiments in which the invention has the most significant effect.

The eccentric oscillating planetary reduction gear 14 is connected to a motor M1 when being used, and includes first and second external gears (planetary gears) 16 and 18 and first and second internal gears 20 and 22 that are engaged with the first and second external gears 16 and 18.

An outline will be described mainly with reference to FIG. 1. An eccentric body shaft (shaft member) 24, which also functions as an input shaft, is connected to a motor shaft 25. The eccentric body shaft 24 is positioned at the centers of the first and second internal gears 20 and 22 in a radial direction (at the position of an axis O1). The eccentric body shaft 24 is supported on first and second carrier members 28 and 30 to be described below through a pair of ball bearings 32 and 34.

First and second eccentric bodies 36 and 38 are formed integrally with the eccentric body shaft 24. The phases of the first and second eccentric bodies 36 and 38 are shifted from each other by 180°. The first and second external gears 16 and 18 are assembled on the outer peripheries of the first and second eccentric bodies 36 and 38 through first and second roller bearings (bearings) 40 and 42, respectively.

A plurality of inner roller holes 66 and 68 are formed in the first and second external gears 16 and 18 at the positions, which are offset from the axis positions 02 and 03 (or the axis O1) of the first and second external gears 16 and 18, at regular intervals in the circumferential direction, respectively. A plurality of inner pins 70 are inserted into the inner roller holes 66 and 68 together with inner rollers 72 and 74, which facilitate sliding, with clearance, respectively.

The first and second internal gears 20 and 22 include a common (one) support pin 76; internal rollers 78 and 80 that are rotatably covered on the outer periphery of the support pin 76 and are engaged with the first and second external gears 16 and 18, respectively; and a common internal gear body 82 that supports the support pin 76 so as to allow the support pin 76 to rotate. The internal rollers 78 and 80 substantially form the teeth of the first and second internal gears 20 and 22. The internal gear body 82 is integrated with a casing 84. In this embodiment, both end portions of the support pin 76 are supported by support pin grooves 82A and 82B that are formed at the internal gear body 82 and the support pin 76 is supported by a support pin groove 82C even between the internal rollers 78 and 80 (three-point support).

The peripheral structure of the first and second external gears 16 and 18 will be described in more detail below.

The first and second carrier members 28 and 30 are disposed on the side portions of the first and second external gears 16 and 18 in the axial direction, respectively. The first and second carrier members 28 and 30 are connected and integrated with each other by the inner pins 70 and a bolt 104 that pass through the first and second external gears 16 and 18. For this reason, the first and second carrier members 28 and 30 are operated in synchronization with rotating components of the first and second external gears 16 and 18. In this embodiment, the first and second carrier members 28 and 30 restrict the rotation of the first and second external gears 16 and 18 since the first carrier member 28 is fixed to a vehicle body frame 110 by a bolt 106 (see FIG. 2).

Meanwhile, the first and second external gears 16 and 18 includes main bodies 90 and 92 that include teeth 86 and 88, and protrusions 94 and 96 that protrude from the main bodies 90 and 92, respectively.

In this embodiment, the number of the teeth 86 of the first external gear 16 is N. N is smaller than the number (corresponding to the number of teeth: N+1) of the internal rollers (first and second teeth) 78 of the first internal gear 20 by one. Likewise, the number of the teeth 88 of the second external gear 18 is also N. N is smaller than the number (N+1) of the internal roller 80 of the second internal gear 22 by one.

The protrusion 94 of the first external gear 16 protrudes from only a portion, on which the first carrier member 28 is present, of the inner peripheral edge of a bearing hole 100 in which the first roller bearing 40 is disposed (from only one side of the inner peripheral edge of a bearing hole 100 in the axial direction) . As a result, the first carrier member 28 and the protrusion 94 of the first external gear 16 overlap each other (the axial coordinate positions of the first carrier member 28 and the protrusion 94 of the first external gear 16 overlap each other) by Δ1 when seen from the diametral direction of the first external gear 16. In contrast, the protrusion 96 of the second external gear 18 protrudes from only a portion, on which the second carrier member 30 is present, of the inner peripheral edge of a bearing hole 102 in which the second roller bearing 42 is disposed (from only one side of the inner peripheral edge of a bearing hole 102 in the axial direction) . As a result, the second carrier member 30 and the protrusion 96 of the second external gear 18 overlap each other by **Δ**2 when seen from the diametral direction of the second external gear 18. That is, the protrusion 94 of the first external gear 16 and the protrusion 96 of the second external gear 18 protrude in directions opposite to each other (in opposite directions) . The side surface of the first external gear 16 facing the second external gear 18 is flat, and there is no protrusion on the side surface of the first external gear. The side surface of the second external gear 18 facing the first external gear 16 is flat, and there is no protrusion on the side surface of the second external gear.

Opposite portions 94A and 28A of the protrusion 94 of the first external gear 16 and the first carrier member 28 are inclined with respect to the axial direction. Likewise, opposite portions 96A and 30A of the protrusion 96 of the second external gear 18 and the second carrier member 30 are also inclined with respect to the axial direction. The opposite portions 94A and 28A and the opposite portions 96A and 30A are parallel to each other.

Further, a part of the teeth 86 and 88 of the first and second external gears 16 and 18, which are opposite to the protrusions 94 and 96 in the axial direction, are cut in this embodiment. For this reason, the widths L1 and L2 (axial thicknesses) of the teeth 86 and 88 of the first and second external gears 16 and 18 are smaller than the axial thicknesses L3 and L4 (of areas) between the teeth 86 and 88 of the first and second external gears 16 and 18 and the protrusions 94 and 96.

Furthermore, the axial lengths L5 and L6 of the bearing holes 100 and 102 of the first and second external gears 16 and 18 are longer than the axial thicknesses L3 and L4 between the teeth 86 and 88 and the protrusions 94 and 96 by the lengths of the protrusions 94 and 96.

The first roller bearing 40 has a large dimension substantially corresponding to the axial length L5 of the bearing hole 100, which is secured wide, so that sufficient bearing capacity is secured. The second roller bearing 42 also has a large dimension substantially corresponding to the axial length L6 of the bearing hole 102, which is secured wide, so that sufficient bearing capacity is secured.

Meanwhile, using that the axial spaces are secured large as described above, in this embodiment, the first and second roller bearings 40 and 42 also have a function of restricting the positions of the first and second external gears 16 and 18 relative to the eccentric body shaft 24.

That is, the first roller bearing 40 includes an inner race 40A, a pair of rollers (rolling elements) 40B and 40C, and a retainer 44. The positions of the pair of rollers 40B and 40C are restricted at projections 40A1 of the inner race 40A so as not to be separated from each other in the axial direction. Further, a snap ring 48 is fitted to the inner periphery of the first external gear 16, and the positions of the pair of rollers 40B and 40C are restricted by the snap ring 48 through thrust plates 61 and 62 so as not to approach each other in the axial direction. Likewise, the second roller bearing 42 also includes an inner race 42A, a pair of rollers (rolling elements) 42B and 42C, and a retainer 46. The positions of the pair of rollers 42B and 42C are restricted at projections 42A1 of the inner race 42A so as not to be separated from each other in the axial direction. Furthermore, a snap ring 50 is fitted to the inner periphery of the second external gear 18, and the positions of the pair of rollers 42B and 42C are restricted by the snap ring 50 through thrust plates 63 and 64 so as not to approach each other in the axial direction. As a result, from this structure, the first and second external gears 16 and 18 are positioned relative to the eccentric body shaft 24 in the axial direction through the first and second roller bearings 40 and 42. For this reason, members, which restrict the positions of the first and second external gears 16 and 18, do not need to be disposed at other portions (for example, between the first carrier member 28 and the first external gear 16, between the first and second external gears 16 and 18, or between the second carrier member 30 and the second external gear 18). Accordingly, the increase of the axial lengths of the other portions is prevented.

Meanwhile, the first and second carrier members 28 and 30 support the casing 84 through a pair of main bearings, that is, an angular ball bearing 112 and a tapered roller bearing 114 so as to allow the casing 84 to rotate. That is, since the first and second external gears 16 and 18 of which the rotation is restricted oscillate in this embodiment, the casing 84 (which is integrated with the internal gear body 82) rotates relatively. Accordingly, the wheel W1 is driven by a tire frame 118 that is fixed to the casing 84 by bolts 116 (see FIG. 2).

Next, the operation of the eccentric oscillating planetary reduction gear 14 will be described.

When the motor shaft 25 of the motor M1 rotates, the eccentric body shaft 24 corresponding to an input shaft rotates. Accordingly, the first and second eccentric bodies 36 and 38 integrated with the eccentric body shaft 24 rotate.

When the first and second eccentric bodies 36 and 38 rotate, the first and second external gears 16 and 18 are internally engaged with the first and second internal gears 20 and 22 through the first and second roller bearings 40 and 42, respectively, while oscillating and rotating.

The rotation of the first and second external gears 16 and 18 is restricted through the inner pins 70 (and the inner rollers 72 and 74) by the first and second carrier members 28 and 30. For this reason, the first and second external gears 16 and 18 only oscillate without rotating. As a result, whenever the eccentric body shaft 24 rotates one revolution, the casing 84 rotates at a speed that is reduced to 1/ (N+1). Meanwhile, the oscillating components of the first and second external gears 16 and 18 are absorbed by clearances that are formed between the inner rollers 72 and 74 and the inner roller holes 66 and 68.

The rotation of the casing 84 is transmitted to the tire frame 118 that is connected to the casing 84 by the bolts 116. As a result, the wheel W1 of the forklift 12 is driven.

Here, the planetary reduction gear 14 according to this embodiment is provided with the two external gears (the first and second external gears 16 and 18), and the protrusions 94 and 96 of the first and second external gears 16 and 18 are provided so as to protrude toward the first and second carrier members 28 and 30, which are disposed on both sides of the first and second external gears 16 and 18 in the axial direction, that is, so as to protrude in the directions opposite to each other. Further, as a result, when seen from the diametral directions of the first and second external gears 16 and 18, the first carrier member 28 and the protrusion 94 of the first external gear 16 overlap each other by **Δ**1 and the second carrier member 30 and the protrusion 96 of the second external gear 18 overlap each other by **Δ**2. That is, the first and second carrier members 28 and 30 are assembled so as to be closer to (so as to further approach) the first and second external gears by **Δ**1 and **Δ**2 than the axial positions of the tips of the projections 94 and 96.

According to this structure, the first roller bearing 40 has a large dimension substantially corresponding to the axial length L5 of the bearing hole 100 that is secured wide in the axial direction by the length of the protrusion 94, so that sufficient bearing capacity is secured. The second roller bearing 42 also has a large dimension substantially corresponding to the axial length L6 of the bearing hole 102 that is secured wide in the axial direction by the length of the protrusion 96, so that sufficient bearing capacity is secured.

Most of a dead space is not formed on the sides of the first and second external gears 16 and 18 in the axial direction, and the reduction of the axial length of the planetary reduction gear 14 (or the increase in strength caused by the increase of the axial thicknesses of the first and second carrier members 28 and 30) is achieved. As a result, the entire planetary reduction gear 14 can be received within the axial length Lw1 of the wheel W1. Since dead spaces are not formed, the amount of a lubricant filled in the planetary reduction gear 14 also can be reduced.

Further, the opposite portions 94A and 28A of the protrusion 94 and the first carrier member 28 and the opposite portions 96A and 30A of the protrusion 96 and the second carrier member 30 are inclined with respect to the axial direction. For this reason, in this kind of eccentric oscillating planetary reduction gear 14, it is possible to sufficiently secure the thicknesses (axial thicknesses) of the first and second carrier members 28 and 30 which are positioned near the inner pins 70 and of which the strength tends to be insufficient.

Furthermore, in this embodiment, the widths (axial lengths) L1 and L2 of the teeth 86 and 88 of the first and second external gears 16 and 18 are smaller than the axial thicknesses L3 and L4 between the teeth 86 and 88 and the protrusions 94 and 96 (are set to the minimum dimension required for securing engagement strength). For this reason, it is possible to perform a work in a gear cutting process for the teeth 86 and 88 in a shorter time to that extent and to lengthen the life of a tool to that extent (it is possible to manufacture the first and second external gears at lower costs).

Specifically, since a structure in which the internal rollers 78 and 80 are covered on the support pin 76 has been employed in this embodiment, it is possible to relatively reduce the engagement loads of the first and second external gears 16 and 18 and the first and second internal gears 20 and 22. Accordingly, it is possible to reduce the widths (axial lengths) L1 and L2 of the teeth 86 and 88 of the first and second external gears 16 and 18 with no trouble, so that it is possible to manufacture the first and second external gears 16 and 18 at lower costs.

Moreover, when the widths L1 and L2 of the teeth 86 and 88 of the first and second external gears 16 and 18 are reduced in this embodiment, a part of the teeth 86 and 88 opposite to the protrusions 94 and 96 in the axial direction are removed. Accordingly, the first and second external gears 16 and 18 include the support pin 76, the plurality of internal rollers 78 and 80, and the internal gear body 82 that supports the support pin 76, and not only both end portions of the support pin 76 in the axial direction but also the middle portion of the support pin 76 in the axial direction can be supported by the support pin grooves 82A to 82C of the internal gear body 82 (three-point support). For this reason, it is possible to maintain the support stiffness of the support pin 76 very high, so that engagement with less vibration and noise can be more smoothly performed.

Additionally, since the first and second external gears 16 and 18 include the protrusions 94 and 96 on one sides thereof in the axial direction (since the other sides thereof in the axial direction are flat without being provided with protrusions), stability is good and handling is also easy when the first and second external gears 16 and 18 are placed on the floor or a work table.

Further, as already described, in this embodiment, the first and second roller bearings 40 and 42 have a function of restricting the positions of the first and second external gears 16 and 18 relative to the eccentric body shaft 24. Accordingly, members, which restrict the positions of the first and second external gears 16 and 18, do not need to be disposed at other portions. For this reason, the increase of the axial length at the portions (which is caused by the disposition of the members restricting the positions of the first and second external gears 16 and 18) is prevented.

Meanwhile, the planetary reduction gear in which the rotation of the external gears is restricted and the internal gears (casing) rotate has been disclosed in the embodiment. However, on the contrary, the invention also can be applied to an eccentric oscillating planetary reduction gear in which internal gears (casing) are fixed, external gears rotate, and rotating components of the external gears are taken out as an output.

Furthermore, in the embodiment, the invention has been applied to a so-called center crank type eccentric oscillating planetary reduction gear in which the eccentric body shaft also functioning as an input shaft is disposed at the axis position of the internal gear. However, the invention also can be applied to, for example, a so-called distribution type eccentric oscillating planetary reduction gear which includes a plurality of eccentric body shafts at positions offset from the axis of an external gear and in which the respective eccentric body shafts allow the external gear to oscillate and rotate on the outer periphery of the eccentric body bearing by simultaneously rotating in the same direction. In this case, the invention can be applied to projections, which are formed at the inner peripheral edges of bearing holes of (the plurality of) eccentric body bearings of the external gear, and a carrier member in the same manner.

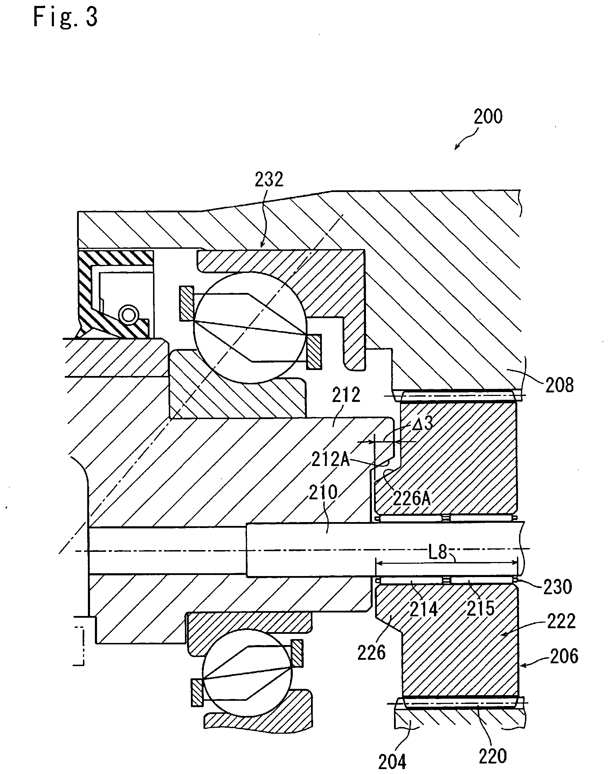

An example of simple planetary reduction gear not comprised in the invention is shown in FIG. 3.

This simple planetary reduction gear 200 includes a sun gear 204, a planetary gear 206 that revolves around the sun gear 204, and an internal gear (casing) 208 with which the planetary gear 206 is internally engaged.

A carrier member 212, which synchronizes with the revolving component of the planetary gear 206 through a planetary pin (shaft member) 210, is disposed on the side of the planetary gear 206 in the axial direction. Meanwhile, as in the previous embodiment, the synchronization of the carrier member generates the rotating component of the planetary gear in an eccentric oscillating reduction gear in which the planetary gear oscillates. However, the synchronization of the carrier member generates not the rotating component of the planetary gear but the revolving component of the planetary gear in a simple planetary reduction gear of this embodiment. Meanwhile, each of the cases includes a case in which the carrier member and the planetary gear rotate in synchronization with each other and a case in which the carrier member is stopped and restricts the rotation or revolution of the planetary gear. The planetary gear 206 is rotatably supported on the outer periphery of the planetary pin 210 through needles (bearing) 214 and 215.

The planetary gear 206 includes a main body 222 that includes teeth 220 and a protrusion 226 that protrudes from only one side (the side on which the carrier member 212 is present) of the inner peripheral edge of a bearing hole, in which the needles 214 are disposed, in the axial direction.

Further, the protrusion 226 and the carrier member 212 overlap each other by **Δ**3 when seen from the diametral direction of the planetary gear 206. Furthermore, opposite portions 226A and 212A of the respective protrusion 226 and the carrier member 212 are inclined with respect to the axial direction.

Meanwhile, reference numeral 230 denotes a retainer of the needles 214 and 215 and reference numeral 232 denotes an angular ball bearing that is disposed between an internal gear 208 and the carrier member 212.

According to this structure, basically the same advantageous effects as the previous embodiment are also obtained. For example, it is possible to particularly increase the stiffness of a portion near the planetary pin 210 by removing a dead space between the planetary gear 206 and the carrier member 212 while sufficiently securing the axial length L8 of the needles 214 and 215 of the planetary gear 206 (while sufficiently securing the transmission capacity of the bearings) . Stability is good when the planetary gear 206 is placed on the floor or a work table.

Only one planetary gear 206 has been used in this structure. However, also in a case in which three or more planetary gears are used, the same advantageous effects can be obtained. Meanwhile, when three or more planetary gears are used, the two planetary gears positioned on the outermost sides in the axial direction may employ the same structure as the structure of the first and second external gears 16 and 18 of FIGS. 1 and 2.

The invention is not limited to the drive of a wheel of a forklift, and can be widely applied to a planetary reduction gear that requires securing transmission capacity while being compact. Accordingly, the same advantageous effects can be obtained.

### Industrial Applicability

The invention can be applied to a planetary gear system including a planetary gear.
- 18:: second external gear
- 20:: first internal gear
- 22:: second internal gear
- 24:: eccentric body shaft
- 28:: first carrier member
- 30:: second carrier member
- 40:: first roller bearing
- 42:: second roller bearing
- 86, 88:: teeth
- 94, 96:: protrusion

## Claims

1. An eccentric oscillating planetary reduction gear (14) including a planetary gear (16, 18), and an internal gear (20, 22) with which the planetary gear (16, 18) is engaged, the planetary reduction gear (14) comprising:
a carrier member (28, 30) that synchronizes with a rotating component or a revolving component of the planetary gear (16, 18) and is disposed on a side portion of the planetary gear (16, 18) in an axial direction,
wherein the planetary gear (16, 18) is supported on a shaft member (24) through a bearing (40, 42) and includes a main body (90, 92) that includes teeth (86, 88) and a protrusion (94, 96) that protrudes from only one side of an inner peripheral edge of a bearing hole (100), in which the bearing (40, 42) is disposed, in the axial direction,
wherein the protrusion (94, 96) protrudes toward said one side with respect to the teeth (86, 88) of the planetary gear (16, 18),
wherein the protrusion (94, 96) and the carrier member (28, 30) overlap each other when seen from a diametral direction of the planetary gear (16, 18), and
wherein the bearing (40, 42) and the carrier member (28, 30) overlap each other when seen from the diametral direction of the planetary gear (16, 18).

2. The planetary reduction gear according to claim 1, wherein respective opposite portions (94A, 96A; 28A, 30A) of the protrusion (94, 96) and the carrier member (28, 30) disposed at the one side with respect to the opposite surface are inclined with respect to the axial direction.

3. The planetary reduction gear according to claim 1 or 2,
wherein the axial lengths (L1, L2) of the teeth (86, 88) of the planetary gear (16, 18) are smaller than an axial length (L3, L4) of an area between the teeth (86, 88) and the protrusion (94, 96) of the planetary gear (16, 18) in the radial direction.

4. The planetary reduction gear according to any one of claims 1 to 3, comprising:
at least two planetary gears (16, 18),
wherein internal gears (20, 22) with which the planetary gears (16, 18) are internally engaged include a support pin (76), internal rollers (78, 80) that are rotatably covered on the outer periphery of the support pin (76) and are separately provided on the two planetary gears (16, 18), respectively, and an internal gear body (82) that supports the support pin (76), and
the internal gear body (82) supports the support pin (76) between the internal rollers (78, 80) that are separately provided on the respective planetary gears (16, 18).

5. The planetary reduction gear according to any one of claims 1 to 4, further comprising:
two planetary gears (16, 18) and a respective number of carrier members (28, 30) that are provided on both sides of the two planetary gears (16, 18) in the axial direction,
wherein the protrusions (94, 96) of the two planetary gears (16, 18) protrude in directions opposite to each other and overlap the carrier members (28, 30) when seen from the diametral directions of the planetary gears (16, 18).

6. The planetary gear according to any one of claims 1 to 5, wherein the protrusion (94, 96, 212) and the bearing (40, 42, 214, 215) overlap each other when seen from a diametral direction of the planetary gear (16, 18, 206).

## Patentansprüche

1. Exzentrisch oszillierendes Planetenuntersetzungsgetriebe (14), welches ein Planetenrad (16, 18) und ein innen verzahntes Zahnrad (20, 22) aufweist, mit welchem das Planetenrad (16, 18) in Eingriff ist, wobei das Planetenuntersetzungsgetriebe (14) Folgendes aufweist:
ein Trägerelement (28, 30), welches synchron ist mit einer sich drehenden Komponente oder einer umlaufenden Komponente des Planetenrades (16, 18) und an einem in axialer Richtung seitlichen Teil des Planetenrades (16, 18) angeordnet ist,
wobei das Planetenrad (16, 18) auf einem Wellenelement (24) durch ein Lager (40, 42) gelagert ist und einen Hauptkörper (90, 92) aufweist, der Zähne (86, 88) aufweist, und einen Vorsprung (94, 96), der von nur einer Seite einer Innenumfangskante eines Lagerlochs (100) in axialer Richtung vorsteht, in welchem das Lager (40, 42) angeordnet ist,
wobei der Vorsprung (94, 96) zu der einen Seite bezüglich der Zähne (86, 88) des Planetenrades (16, 18) vorsteht,
wobei der Vorsprung (94, 96) und das Trägerelement (28, 30) in einer Ansicht von einer diametralen Richtung bzw. Durchmesserrichtung des Planetenrades (16, 18) miteinander überlappen, und
wobei das Lager (40, 42) und das Trägerelement (28, 30) in einer Ansicht von der diametralen Richtung bzw. Durchmesserrichtung des Planetenrades (16, 18) miteinander überlappen.

2. Planetenuntersetzungsgetriebe nach Anspruch 1,
wobei jeweilige entgegengesetzte Teile (94A, 96A; 30A) des Vorsprungs (94, 96) und des Trägerelementes (28, 30), die an der einen Seite bezüglich der gegenüberliegenden Fläche angeordnet sind, bezüglich der axialen Richtung geneigt sind.

3. Planetenuntersetzungsgetriebe nach Anspruch 1 oder 2,
wobei die axialen Längen (L1, L2) der Zähne (86, 88) des Planetenrades (16, 18) kleiner sind als die axiale Länge (L3, L4) eines Bereiches zwischen den Zähnen (86, 88) und dem Vorsprung (94, 96) des Planetenrades (16, 18) in der radialen Richtung.

4. Planetenuntersetzungsgetriebe nach einem der Ansprüche 1 bis 3, welches Folgendes aufweist:
mindestens zwei Planetenräder (16, 18),
wobei innen verzahnte Zahnräder (20, 22) mit welchen die Planetenräder (16, 18) von innen in Eingriff sind, einen Tragstift (76), innere Rollen (78, 80), die drehbar auf dem Außenumfang des Tragstiftes (76) abgedeckt bzw. angeordnet sind und jeweils separat an den zwei Planetenrädern (16, 18) vorgesehen sind, und einen Körper (82) des innen verzahnten Zahnrades aufweisen, der den Tragstift (76) trägt, und
wobei der Körper (82) des innen verzahnten Zahnrades den Tragstift (76) zwischen den inneren Rollen (78, 80) trägt, die separat an den jeweiligen Planetenrädern (16, 18) vorgesehen sind.

5. Planetenuntersetzungsgetriebe nach einem der Ansprüche 1 bis 4, welches weiter Folgendes aufweist:
zwei Planetenräder (16, 18) und eine entsprechende Anzahl von Trägerelementen (28, 30), die in der axialen Richtung auf beiden Seiten der zwei Planetenräder (16, 18) vorgesehen sind,
wobei die Vorsprünge (94, 96) der zwei Planetenräder (16, 18) in zueinander entgegengesetzten Richtungen vorstehen und in einer Ansicht von den diametralen Richtungen bzw. Durchmesserrichtungen der Planetenräder (16, 18) die Trägerelemente (28, 30) überlappen.

6. Planetengetriebe nach einem der Ansprüche 1 bis 5, wobei der Vorsprung (94, 96, 212) und das Lager (40, 42, 214, 215) in einer Ansicht von einer diametralen Richtung bzw. Durchmesserrichtung des Planetenrades (16, 18, 206) miteinander überlappen.

## Revendications

1. Réducteur planétaire oscillant excentrique (14) comportant
un engrenage planétaire (16, 18) et un engrenage interne (20, 22) avec lequel l'engrenage planétaire (16, 18) est engagé, le réducteur planétaire (14) comprenant :
un élément porteur (28, 30) qui se synchronise avec un composant de rotation ou un composant de révolution de l'engrenage planétaire (16, 18) et qui est disposé sur une partie latérale de l'engrenage planétaire (16, 18) dans une direction axiale,
dans lequel l'engrenage planétaire (16, 18) est supporté sur un élément d'arbre (24) au moyen d'un palier (40, 42) et comporte un corps principal (90, 92) qui comporte des dents (86, 88) et une saillie (94, 96) qui saille depuis un seul côté d'un bord périphérique intérieur d'un orifice de palier (100), dans lequel le palier (40, 42) est disposé, dans la direction axiale,
dans lequel la saillie (94, 96) saille vers ledit un côté par rapport aux dents (86, 88) de l'engrenage planétaire (16, 18),
dans lequel la saillie (94, 96) et l'élément porteur (28, 30) se chevauchent lorsqu'ils sont vus depuis une direction diamétrale de l'engrenage planétaire (16, 18), et
dans lequel le palier (40, 42) et l'élément porteur (28, 30) se chevauchent lorsqu'ils sont vus depuis une direction diamétrale de l'engrenage planétaire (16, 18).

2. Réducteur planétaire selon la revendication 1,
dans lequel des parties opposées respectives (94A, 96A ; 28A, 30A) de la saillie (94, 96) et de l'élément porteur (28, 30) disposés au niveau dudit un côté par rapport à la surface opposé et sont inclinées par rapport à la direction axiale.

3. Réducteur planétaire selon la revendication 1 ou 2,
dans lequel les longueurs axiales (L1, L2) des dents (86, 88) de l'engrenage planétaire (16, 18) sont plus courtes qu'une longueur axiale (L3, L4) d'une région entre les dents (86, 88) et la saillie (94, 96) de l'engrenage planétaire (16, 18) dans la direction radiale.

4. Réducteur planétaire selon l'une quelconque des revendications 1 à 3, comprenant :
au moins deux engrenages planétaires (16, 18),
dans lequel des engrenages internes (20, 22) avec lesquels les engrenages planétaires (16, 18) sont engagés à l'intérieur comportent un axe de support (76), des rouleaux internes (78, 80) qui sont recouverts à rotation sur la périphérie externe de l'axe de support (76) et sont fournis séparément sur les deux engrenages planétaires (16, 18), respectivement, et un corps d'engrenage interne (82) qui supporte la broche de support (76), et
le corps d'engrenage interne (82) supporte l'axe de support (76) entre les rouleaux internes (78, 80) qui sont prévus séparément sur les engrenages planétaires respectifs (16, 18).

5. Réducteur planétaire selon l'une quelconque des revendications 1 à 4, comprenant en outre :
deux engrenages planétaires (16, 18) et un nombre correspondant d'éléments porteurs (28, 30) qui sont prévus des deux côtés des deux engrenages planétaires (16, 18) dans la direction axiale,
dans lequel les saillies (94, 96) des deux engrenages planétaires (16, 18) saillent dans des directions opposées l'une par rapport à l'autre et chevauchent les éléments porteurs (28, 30) lorsqu'elles sont vues depuis les directions diamétrales des engrenages planétaires (16, 18).

6. Réducteur planétaire selon l'une quelconque des revendications 1 à 5, dans lequel la saillie (94, 96, 212) et le palier (40, 42, 214, 215) se chevauchent l'un l'autre lorsqu'ils sont vus depuis une direction diamétrale de l'engrenage planétaire (16, 18, 206).
